# FASCICULE DE BREVET EUROPEEN

(11) **EP 2 618 465 B1**
(45) Date de publication et mention de la délivrance du brevet: **20.10.2021**
(21) Numéro de dépôt: 13151493.7
(22) Date de dépôt: 16.01.2013
(51) Int. Cl.: H02K 16/02, H02K 5/16, H02K 16/00, H02K 1/28, H02K 7/09

(54) **Machine électrique comprenant deux rotors et au moins deux paliers, avec un seul palier agencé entre les deux rotors suivant l'axe de rotation**
Elektrische Maschine, die zwei Rotoren und mindestens zwei Lager umfasst, mit einem Lager zwischen den beiden Rotoren entlang der Rotationsachse
Electrical machine including two rotors and at least two bearings, with a single bearing arranged between the two rotors along the axis of rotation

(30) Priorité: 17.01.2012 FR 1250448
(43) Date de publication de la demande: 24.07.2013
(73) Titulaire: GE Energy Power Conversion Technology Ltd, Rugby Warwickshire CV21 1BU (GB)
(72) Inventeur: Galmiche, Christophe, 54200 Toul (FR)
(74) Mandataire: Serjeants LLP

(56) Documents cités:
- DE-A1-102006 038 576
- DE-A1-102009 015 926
- DE-U1- 29 621 850
- None

## Description

On connaît une telle machine électrique comprenant deux stators, chacun étant destiné à engendrer un champ tournant, ainsi que deux rotors, chacun étant associé à un stator respectif et propre à être mis en mouvement sous l'effet du champ du stator associé.

Une telle machine électrique comprend un arbre mobile en rotation autour d'un axe de rotation, les deux rotors étant solidaires de l'arbre, et deux paliers d'extrémité supportant l'arbre en chacune de ces extrémités. Les deux paliers d'extrémité sont disposés, suivant l'axe de rotation, de part et d'autre de l'ensemble des deux rotors.

Toutefois, une telle machine électrique n'est pas adaptée pour des vitesses de rotation élevées, telles que des vitesses de rotation supérieures à 8000 tours par minute.

DE10 2009 015 926 A1 décrit une machine électrique comprenant :
- au moins un stator,
- un arbre mobile en rotation autour d'un axe de rotation,
- deux rotors distincts, chacun étant solidaire de l'arbre,
- au moins deux paliers, propres à supporter les deux rotors et l'arbre, un seul palier desdits paliers étant agencé entre les deux rotors suivant l'axe de rotation,
dans laquelle et l'arbre comprend trois bouts d'arbre, chaque rotor est solidaire de deux bouts d'arbre, un bout d'arbre disposé entre les deux rotors étant commun aux deux rotors et les trois bouts d'arbre étant solidaires en rotation autour de l'axe de rotation.

Le but de l'invention est donc de proposer une machine électrique adaptée à des vitesses de rotation élevées, tout en conservant le même encombrement.

A cet effet, l'invention a pour objet une machine électrique selon la revendiction 1.

Suivant d'autres aspects avantageux de l'invention, la machine électrique comprend une ou plusieurs des caractéristiques suivantes:
- la machine comprend exactement trois paliers, deux paliers étant agencés, suivant l'axe de rotation, de part et d'autre de l'ensemble des deux rotors, et le troisième palier étant agencé entre les deux rotors suivant l'axe de rotation,
- la machine comprend exactement deux paliers, un palier étant agencé au voisinage d'une extrémité de l'arbre, et l'autre palier étant agencé entre les deux rotors suivant l'axe de rotation,
- chaque palier comporte son propre boitier,
- chaque palier est un élément parmi le groupe consistant en : un palier magnétique, un palier à huile, un palier à eau, un palier à gaz et un palier à roulements,
- la machine comprend une unique carcasse, et les deux rotors sont disposés à l'intérieur de la carcasse,
- la machine est adaptée pour fonctionner à des vitesse de rotation nominale élevée, autour de l'axe de rotation, supérieure à 8 000 tours par minute, de préférence supérieure à 15 000 tours par minute, de préférence encore supérieure à 20 000 tours par minute,
- la machine comprend deux stators, chacun est adaptée à entraîner en rotation un rotor respectif, et
la machine comprend un unique stator, le stator est adaptée à entraîner en rotation les deux rotors.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique en coupe axiale d'une machine électrique selon un premier mode de réalisation de l'invention, et
- la figure 2 est une vue analogue à celle de la figure 1 selon un deuxième mode de réalisation de l'invention.

La machine électrique 10 comprend une carcasse 12, un premier stator 14 et un premier rotor 16, ainsi qu'un deuxième stator 18 et un deuxième rotor 20. En variante non représentée, la machine électrique 10 comprend un unique stator.

La machine électrique 10 comprend un arbre 22, mobile en rotation autour d'un axe longitudinal X, également appelé axe de rotation, les deux rotors 16, 20 étant solidaires de l'arbre 22.

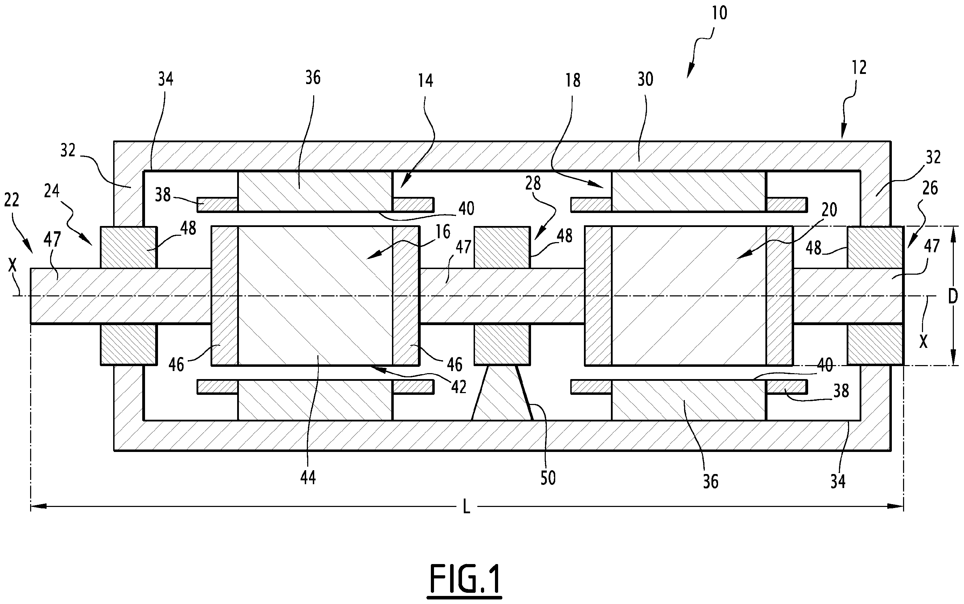

La machine électrique 10 comprend également un premier palier 24, un deuxième palier 26 et un troisième palier 28, propres à supporter l'arbre 22 et les deux rotors 16, 20. Dans l'exemple de réalisation de la figure 1, la machine électrique 10 comprend exactement trois paliers 24, 26, 28.

La machine électrique 10 est, par exemple, une machine asynchrone. En variante, la machine 10 est une machine synchrone.

La machine électrique 10 présente une vitesse de rotation nominale élevée, telle qu'une vitesse supérieure à 8 000 tours par minute. La vitesse de rotation nominale est de préférence supérieure à 15 000 tours par minute, de préférence encore supérieure à 20 000 tours par minute.

La carcasse 12 comprend un corps principal 30 en forme d'un cylindre creux s'étendant selon l'axe longitudinal X, et deux platines d'extrémité 32. Chaque platine d'extrémité 32 obture une ouverture 34 du corps principal agencée en une extrémité respective du cylindre creux.

La carcasse 12 porte les premier et deuxième stators 14, 18, ainsi que les premier, deuxième et troisième paliers 24, 26, 28.

Chaque stator 14, 18 comporte un corps principal 36 et des enroulements 38 maintenus dans les encoches du corps principal 36. Le corps principal 36 est en forme d'un cylindre d'axe X, et présente en son centre un évidement 40 de passage du rotor 16, 20 correspondant, comme représenté sur la figure 1. Chaque enroulement 38 est propre à engendrer un champ tournant susceptible d'entraîner en rotation le rotor 16, 20 correspondant.

Chaque rotor 16, 20 comporte un corps principal 42 s'étendant selon l'axe longitudinal X, ainsi qu'un enroulement rotorique, non représenté, refermé sur lui-même, formant une cage d'écureuil, lorsque la machine électrique 10 est une machine asynchrone. Le corps principal 42 comprend un empilement 44 de fines tôles métalliques coopérant avec deux organes de serrage 46, en forme de brides, disposés de part et d'autre de chaque extrémité axiale de cet empilement 44. Les deux organes de serrage 46 sont reliés mécaniquement par des tirants de fixation, non représentés, les tirants de fixation s'étendant selon l'axe longitudinal X et traversant de part en part l'empilement de tôles 44 selon l'axe longitudinal X. En complément, les organes de serrage 46 sont solidaires de l'arbre 22.

En variante, chaque rotor 16, 20 est un rotor à aimants permanents, et comporte une pluralité d'aimants fixés au corps principal 42, lorsque la machine électrique 10 est une machine synchrone. Les aimants permanents forment des pôles magnétiques correspondants.

Chaque rotor 16, 20 présente un diamètre D selon une direction radiale perpendiculaire à l'axe longitudinal X, et la valeur du diamètre D est sensiblement identique pour les deux rotors 16, 20. La valeur du diamètre D est typiquement comprise entre 150 mm et 350 mm.

Les deux stators 14, 18 et les deux rotors 16, 20 sont disposés à l'intérieur de la carcasse 12, c'est-à-dire à l'intérieur du cylindre creux 30.

L'arbre 22 est mobile en rotation autour de l'axe longitudinal X, et est porté par les paliers 24, 26, 28.

L'arbre 22 présente une longueur L selon l'axe longitudinal X. La longueur L de l'arbre 22 est typiquement comprise entre 1 500 mm et 3 000 mm.

Dans l'exemple de réalisation de la figure 1, l'arbre 22 comporte trois bouts d'arbre 47, un bout d'arbre 47 étant disposé entre les deux rotors 16, 20, et les deux autres bouts d'arbre 47 étant disposés de part et d'autre des deux rotors 16, 20 suivant l'axe longitudinal X. Les trois bouts d'arbre 47 sont fixés aux organes de serrage 46 correspondants. En variante, les organes de serrage 46 sont venus de matière avec les bouts d'arbre 47 correspondants. Le bout d'arbre 47 disposé entre les deux rotors 16, 20 et les deux organes de serrage 46 correspondants ne forment alors qu'une seule pièce.

Les premier et deuxième paliers 24, 26, également appelés paliers d'extrémité, sont agencés de part et d'autre de l'ensemble des deux rotors 16, 20 suivant l'axe longitudinal X. Selon l'invention, un unique palier, à savoir le troisième palier 28, également appelé palier intermédiaire, est agencé entre les deux rotors 16, 20 suivant l'axe longitudinal X, formant axe de rotation des rotors.

Chaque palier 24, 26, 28 comporte son propre boîtier 48.

Le palier 24, 26, 28 est, par exemple, un palier magnétique. En variante, le palier 24, 26, 28 est un palier à huile, ou un palier à eau, ou un palier à gaz, ou encore un palier à roulements.

Les premier et deuxième paliers 24, 26 sont de préférence d'un type distinct du troisième palier 28. Les premier et deuxième paliers 24, 26 sont, par exemple, des paliers magnétiques, et le troisième palier 28 est un palier à huile. En variante, les premier et deuxième paliers 24, 26 sont, par exemple, des paliers à huile, et le troisième palier 28 est un palier magnétique.

En variante, les premier, deuxième et troisième paliers 24, 26, 28 sont tous de même type. Les premier, deuxième et troisième paliers 24, 26, 28 sont, par exemple, des paliers magnétiques.

Les premier et deuxième paliers 24, 26 sont solidaires d'une platine d'extrémité 32 respective. Le troisième palier 28 est solidaire d'un support 50 fixé à l'intérieur du cylindre creux 30 de la carcasse.

Dans l'exemple de réalisation de la figure 1, le troisième palier 28 est disposé sensiblement au milieu de l'espacement entre le premier rotor 16 et le deuxième rotor 20 selon l'axe longitudinal X. Autrement dit, le troisième palier 28 est disposé sensiblement à mi-distance entre le premier rotor 16 et le deuxième rotor 20 selon l'axe longitudinal X.

En variante, lorsque l'arbre 22 comprend deux segments d'arbre distincts solidaires en rotation autour de l'axe de rotation X, la fixation des deux segments d'arbre est positionnée sensiblement au milieu de l'espacement entre le premier rotor 16 et le deuxième rotor 20 selon l'axe longitudinal X, et le troisième palier 28 est alors décalé par rapport au milieu dudit espacement entre le premier rotor 16 et le deuxième rotor 20.

Chaque palier 24, 26, 28 est un moyen de soutien de l'arbre 22, notamment propre à permettre le positionnement des rotors 16, 20 selon une direction radiale perpendiculaire à l'axe longitudinal X.

En complément, un des paliers 24, 26, 28 intègre une fonction de butée axiale, afin de permettre le positionnement des rotors 16, 20 selon l'axe longitudinal X.

Lors du fonctionnement de la machine électrique 10, l'arbre 22 tend à se fléchir selon la direction radiale sous l'effet de la force centrifuge et de la force de gravité, la force centrifuge étant de manière connue une fonction croissante de la vitesse de rotation de la machine.

Le palier intermédiaire 28, agencé selon l'invention entre les deux rotors 16, 20 suivant l'axe longitudinal X, permet alors d'éviter une flèche excessive de l'arbre 22, ce qui autorise un fonctionnement à des vitesses de rotation élevées, telles que des vitesses supérieures à 8 000 tours par minute.

Le palier intermédiaire 28 permet également d'augmenter les fréquences propres de l'arbre 22 et des deux rotors 16, 20, ce qui réduit les vibrations de l'arbre 22 et des deux rotors 16, 20 en rotation. En effet, les fréquences propres de l'arbre 22 et des deux rotors 16, 20 ne correspondent alors plus à la plage exploitée de vitesses de rotation, ce qui permet d'éviter des résonances importantes dans la plage exploitée de vitesses de rotation.

L'encombrement de la machine électrique selon l'invention est en outre sensiblement identique à l'encombrement de la machine de l'état de la technique, étant donné que le troisième palier 28 est agencé entre les deux rotors 16, 20 existants.

L'encombrement de la machine électrique selon l'invention est par contre inférieur à celui de deux machines électriques de l'état de la technique accouplées entre elles via un accouplement, chaque machine électrique ayant son propre rotor et son propre stator agencés à l'intérieur de sa propre carcasse.

Les deux rotors 16, 20 permettent d'améliorer la fiabilité de la machine électrique 10, puisqu'en cas d'avarie d'un rotor parmi les deux rotors 16, 20 ou en cas d'avarie d'un stator parmi les deux stators 14, 18, l'autre rotor et l'autre stator restent opérationnels.

Les deux rotors 16, 20 permettent également d'augmenter la puissance électrique de la machine électrique, tout en conservant un encombrement identique selon la direction radiale, perpendiculaire à l'axe longitudinal X, ou bien permettent, à puissance électrique équivalente, de diminuer l'encombrement de la machine électrique selon la direction radiale.

Etant donné, d'une part, que la valeur du diamètre D des rotors 16, 20 est limitée par les contraintes liées à la force centrifuge et la vitesse périphérique, et d'autre part, que la longueur de chaque rotor 16, 20 est limitée pour éviter une flèche excessive, de par la vitesse de rotation élevée, supérieure à 8 000 tours par minute, la puissance électrique d'une machine électrique tournant à une telle vitesse est relativement limitée.

La machine électrique 10 selon l'invention permet alors d'offrir une puissance électrique plus importante pour les vitesses de rotation précitées et une valeur donnée du diamètre D, de par la présence du palier intermédiaire 28 limitant la flèche de l'arbre 22.

On conçoit ainsi que la machine électrique selon l'invention est adaptée pour fonctionner à des vitesses de rotation élevées, telles que des vitesses supérieures à 8 000 tours par minute, de préférence supérieures à 15 000 tours par minute, et de préférence encore supérieures à 20 000 tours par minute, tout en conservant le même encombrement selon la direction radiale.

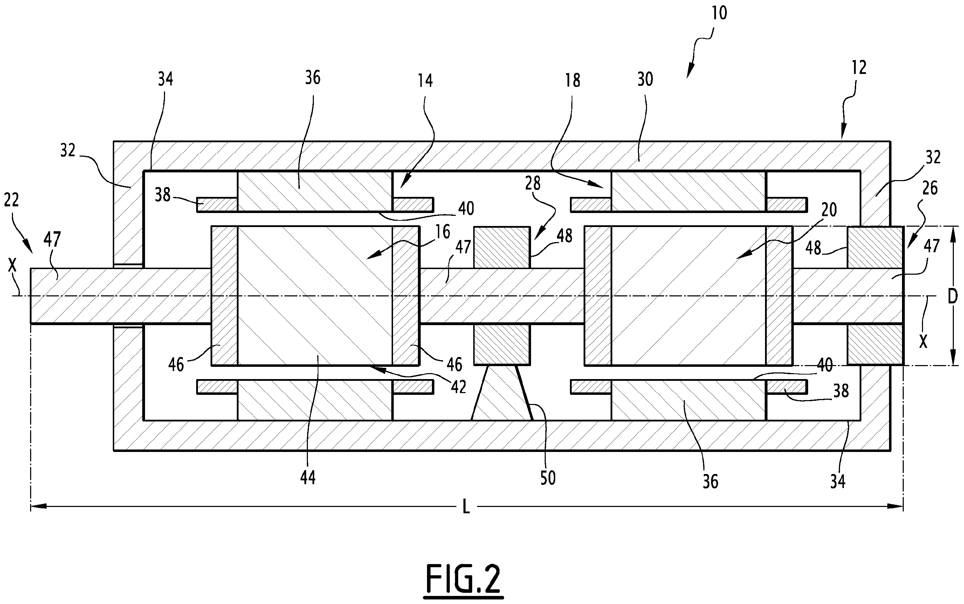

La figure 2 illustre un deuxième mode de réalisation de l'invention pour lequel les éléments analogues au premier mode de réalisation, décrits précédemment, sont repérés par des références identiques, et ne sont pas décrits à nouveau.

Selon le deuxième mode de réalisation, la machine électrique 10 comprend un palier d'extrémité 26 à une seule extrémité de l'arbre 22 et le palier intermédiaire 28. Dans l'exemple de réalisation de la figure 2, la machine électrique 10 comprend exactement deux paliers 26, 28.

Selon l'invention, un unique palier, à savoir le palier intermédiaire 28, est agencé entre les deux rotors 16, 20 suivant l'axe longitudinal X. Le palier d'extrémité 26 est agencé au voisinage d'une extrémité de l'arbre 22.

L'extrémité de l'arbre 22 qui n'est pas supportée par un palier d'extrémité est à l'écart de la platine d'extrémité 32 respective, et n'est pas supportée par ladite platine d'extrémité 32. L'extrémité de l'arbre 22 qui n'est pas supportée par un palier d'extrémité 32 est destinée à être supportée par un palier d'une autre machine propre à être accouplée à la machine électrique 10. L'autre machine est, par exemple, entraînée par la machine électrique 10.

En complément, un joint d'étanchéité, non représenté, est agencé entre ladite extrémité de l'arbre 22 non supportée par un palier d'extrémité et la platine d'extrémité 32 correspondante.

Le palier d'extrémité 26 est solidaire d'une platine d'extrémité 32 respective. Le palier intermédiaire 28 est solidaire du support 50 fixé à l'intérieur du cylindre creux 30 de la carcasse.

Chaque palier 26, 28 comporte son propre boîtier 48.

Le palier 26, 28 est, par exemple, un palier magnétique. En variante, le palier 26, 28 est, par exemple, un palier à huile, ou un palier à eau, ou un palier à gaz, ou encore un palier à roulements.

Le palier d'extrémité 26 est de préférence d'un type distinct du palier intermédiaire 28. Le palier d'extrémité 26 est, par exemple, un palier magnétique, et le palier intermédiaire 28 est un palier à huile. En variante, le palier d'extrémité 26 est, par exemple, un palier à huile, et le palier intermédiaire 28 est un palier magnétique.

En variante, le palier d'extrémité 26 et le palier intermédiaire 28 sont de même type. Le palier d'extrémité 26 et le palier intermédiaire 28 sont, par exemple, des paliers magnétiques.

Le fonctionnement de ce deuxième mode de réalisation est analogue à celui du premier mode de réalisation, et n'est pas décrit à nouveau.

Les avantages de ce deuxième mode de réalisation sont analogues à ceux du premier mode de réalisation, et ne sont pas décrits à nouveau.

On conçoit ainsi que la machine électrique selon l'invention est adaptée pour fonctionner à des vitesses de rotation élevées, telles que des vitesses supérieures à 8 000 tours par minute, de préférence supérieures à 15 000 tours par minute, et de préférence encore supérieures à 20 000 tours par minute, tout en conservant le même encombrement selon la direction radiale.

## Revendications

1. Machine électrique (10) comprenant :
- au moins un stator (14, 18),
- un arbre (22) mobile en rotation autour d'un axe de rotation (X),
- deux rotors (16, 20) distincts, chacun étant solidaire de l'arbre (22),
- au moins deux paliers (24, 26, 28), propres à supporter les deux rotors (16, 20) et l'arbre (22), un seul palier (28) desdits paliers (24, 26, 28) étant agencé entre les deux rotors (16, 20) suivant l'axe de rotation (X), dans laquelle :
chaque rotor (16, 20) comporte un corps principal (42) s'étendant selon l'axe longitudinal (X), le corps principal (42) comprend un empilement (44) de tôles métalliques coopérant avec deux organes de serrage (46), en forme de brides, disposés de part et d'autre de chaque extrémité axiale de cet empilement (44), les deux organes de serrage (46) sont reliés mécaniquement par des tirants de fixation, les tirants de fixation s'étendant selon l'axe longitudinal (X) et traversant de part en part l'empilement de tôles (44) selon l'axe longitudinal (X) ; et
l'arbre (22) comprend trois bouts d'arbre (47), chaque rotor (16, 20) est solidaire de deux bouts d'arbre (47), les trois bouts d'arbre (47) étant fixés aux organes de serrage (46) correspondants ou les organes de serrage (46) étant venus de matière avec les bouts d'arbre (47) correspondants, un bout d'arbre (47) disposé entre les deux rotors (16, 20) étant commun aux deux rotors (16, 20) et les trois bouts d'arbre (47) étant solidaires en rotation autour de l'axe de rotation (X).

2. Machine électrique (10) selon la revendication 1, dans laquelle la machine (10) comprend exactement trois paliers (24, 26, 28), deux paliers (24, 26) étant agencés, suivant l'axe de rotation (X), de part et d'autre de l'ensemble des deux rotors (16, 20), et le troisième palier (28) étant agencé entre les deux rotors (16, 20) suivant l'axe de rotation (X).

3. Machine électrique (10) selon la revendication 1, dans laquelle la machine (10) comprend exactement deux paliers (26, 28), un palier (26) étant agencé au voisinage d'une extrémité de l'arbre (22), et l'autre palier (28) étant agencé entre les deux rotors (16, 20) suivant l'axe de rotation (X).

4. Machine électrique (10) selon l'une quelconque des revendications précédentes, dans laquelle chaque palier (24, 26, 28) comporte son propre boitier (48).

5. Machine électrique (10) selon l'une quelconque des revendications précédentes, dans laquelle chaque palier (24, 26, 28) est un élément parmi le groupe consistant en : un palier magnétique, un palier à huile, un palier à eau, un palier à gaz et un palier à roulements.

6. Machine électrique (10) selon l'une quelconque des revendications précédentes, dans laquelle la machine (10) comprend une unique carcasse (12), et les deux rotors (16, 20) sont disposés à l'intérieur de la carcasse (12).

7. Machine électrique (10) selon l'une quelconque des revendications précédentes, dans laquelle la machine (10) est adaptée pour fonctionner à des vitesse de rotation nominale élevées, autour de l'axe de rotation (X), supérieure à 8 000 tours par minute, de préférence supérieure à 15 000 tours par minute, de préférence encore supérieure à 20 000 tours par minute.

8. Machine électrique (10) selon l'une quelconque des revendications précédentes, dans laquelle la machine (10) comprend deux stators (14, 18), chacun est adaptée à entraîner en rotation un rotor (16, 20) respectif.

9. Machine électrique (10) selon l'une quelconque des revendications 1 à 7, dans laquelle la machine (10) comprend un unique stator, le stator est adaptée à entraîner en rotation les deux rotors (16, 20).

## Patentansprüche

1. Elektrische Maschine (10), umfassend:
- mindestens einen Stator (14, 18),
- eine um eine Drehachse (X) drehbewegliche Welle (22),
- zwei verschiedene Rotoren (16, 20), wobei jeder fest mit der Welle (22) verbunden ist,
- mindestens zwei Lager (24, 26, 28), geeignet, um die zwei Rotoren (16, 20) und die Welle (22) zu stützen, wobei ein einziges Lager (28) der Lager (24, 26, 28) zwischen den zwei Rotoren (16, 20) entlang der Drehachse (X) eingerichtet ist, wobei:
jeder Rotor (16, 20) einen Hauptkörper (42) umfasst, der sich entlang der Längsachse (X) erstreckt, wobei der Hauptkörper (42) einen Stapel (44) von metallenen Blechplatten umfasst, die mit zwei Klemmelementen (46), in Form von Flanschen, zusammenwirken, die beiderseits jedes axialen Endes dieses Stapels (44) angeordnet sind, wobei die zwei Klemmelemente (46) über Befestigungsgurte mechanisch verbunden sind, wobei die Befestigungsgurte sich entlang der Längsachse (X) erstrecken und den Stapel von Blechplatten (44) entlang der Längsachse (X) von einer Seite zur anderen durchqueren; und
die Welle (22) drei Wellenzapfen (47) umfasst, jeder Rotor (16, 20) mit zwei Wellenzapfen (47) fest verbunden ist, wobei die drei Wellenzapfen (47) an den entsprechenden Klemmelementen (46) befestigt sind oder die Klemmelemente (46) mit den entsprechenden Wellenzapfen (47) einstückig sind, wobei ein Wellenzapfen (47), der zwischen den zwei Rotoren (16, 20) angeordnet ist, den zwei Rotoren (16, 20) gemeinsam ist und die drei Wellenzapfen (47) um die Drehachse (X) drehfest verbunden sind.

2. Elektrische Maschine (10) nach Anspruch 1, wobei die Maschine (10) genau drei Lager (24, 26, 28) umfasst, wobei zwei Lager (24, 26) entlang der Drehachse (X) beiderseitig der Anordnung der zwei Rotoren (16, 20) eingerichtet sind und das dritte Lager (28) zwischen den zwei Rotoren (16, 20) entlang der Drehachse (X) eingerichtet ist.

3. Elektrische Maschine (10) nach Anspruch 1, wobei die Maschine (10) genau zwei Lager (26, 28) umfasst, wobei ein Lager (26) in der Nähe eines Endes der Welle (22) eingerichtet ist und das andere Lager (28) zwischen den zwei Rotoren (16, 20) entlang der Drehachse (X) eingerichtet ist.

4. Elektrische Maschine (10) nach einem der vorstehenden Ansprüche, wobei jedes Lager (24, 26, 28) sein eigenes Gehäuse (48) umfasst.

5. Elektrische Maschine (10) nach einem der vorstehenden Ansprüche, wobei jedes Lager (24, 26, 28) ein Bauteil aus der Gruppe ist, die besteht aus: einem Magnetlager, einem Öllager, einem Wasserlager, einem Gaslager und einem Wälzlager.

6. Elektrische Maschine (10) nach einem der vorstehenden Ansprüche, wobei die Maschine (10) einen einzigen Rahmen (12) umfasst und die zwei Rotoren (16, 20) im Inneren des Rahmens (12) angeordnet sind.

7. Elektrische Maschine (10) nach einem der vorstehenden Ansprüche, wobei die Maschine (10) angepasst ist, um bei erhöhten Nominaldrehzahlen um eine Drehachse (X) zu funktionieren, die höher sind als 8 000 Umdrehungen pro Minuten, bevorzugt höher als 15 000 Umdrehungen pro Minute, noch bevorzugter höher als 20 000 Umdrehungen pro Minute.

8. Elektrische Maschine (10) nach einem der vorstehenden Ansprüche, wobei die Maschine (10) zwei Statoren (14, 18) umfasst, wobei jeder angepasst ist, um einen jeweiligen Rotor (16, 20) in Drehung zu versetzen.

9. Elektrische Maschine (10) nach einem der Ansprüche 1 bis 7, wobei die Maschine (10) einen einzigen Stator umfasst, wobei der Stator angepasst ist, um die zwei Rotoren (16, 20) in Drehung zu versetzen.

## Claims

1. Electric machine (10) comprising:
- at least one stator (14, 18),
- a shaft (22) movable in rotation around an axis of rotation (X),
- two distinct rotors (16, 20), each being interdependent of the shaft (22),
- at least two bearings (24, 26, 28) specific to supporting the two rotors (16, 20) and the shaft (22), one single bearing (28) of said bearings (24, 26, 28) being arranged between the two rotors (16, 20) around the axis of rotation (X), wherein:
each rotor (16, 20) comprises a main body (42) extending along the longitudinal axis (X), the main body (42) comprises a stack (44) of metal sheets engaging with two clamping members (46), flange-shaped, disposed on either side of each axial end of this stack (44), the two clamping members (46) are mechanically connected by fastening anchors, the fastening anchors extending along the longitudinal axis (X) and passing through on either side of the stack of sheets (44) along the longitudinal axis (X); and
the shaft (22) comprises three shaft ends (47), each rotor (16, 20) is interdependent of two shaft ends (47), the three shaft ends (47) being fastened to the corresponding clamping members (46) or the clamping members (46) being made in one piece with the corresponding shaft ends (47), a shaft end (47) disposed between the two rotors (16, 20) being common to the two rotors (16, 20) and the three shaft ends (47) being interdependent in rotation around the axis of rotation (X).

2. Electric machine (10) according to claim 1, wherein the machine (10) precisely comprises three bearings (24, 26, 28), two bearings (24, 26) being arranged, along the axis of rotation (X), on either side of the assembly of the two rotors (16, 20), and the third bearing (28) being arranged between the two rotors (16, 20) along the axis of rotation (X).

3. Electric machine (10) according to claim 1, wherein the machine (10) precisely comprises two bearings (26, 28), one bearing (26) being arranged in the vicinity of an end of the shaft (22), and the other bearing (28) being arranged between the two rotors (16, 20) along the axis of rotation (X).

4. Electric machine (10) according to any one of the preceding claims, wherein each bearing (24, 26, 28) comprises its own casing (48).

5. Electric machine (10) according to any one of the preceding claims, wherein each bearing (24, 26, 28) is an element from among the group consisting of: a magnetic bearing, an oil bearing, a water bearing, a gas bearing and a roller bearing.

6. Electric machine (10) according to any one of the preceding claims, wherein the machine (10) comprises one single frame (12), and the two rotors (16, 20) are disposed inside the frame (12).

7. Electric machine (10) according to any one of the preceding claims, wherein the machine (10) is adapted to operate a high nominal rotation speeds, around the axis of rotation (X), greater than 8000 rotations per minute, preferably greater than 15000 rotations per minute, preferably even greater than 20000 rotations per minute.

8. Electric machine (10) according to any one of the preceding claims, wherein the machine (10) comprises two stators (14, 18), each is adapted to drive a respective rotor (16, 20) in rotation.

9. Electric machine (10) according to any one of claims 1 to 7, wherein the machine (10) comprises one single stator, the stator is adapted to drive the two rotors (16, 20) in rotation.
